# EUROPÄISCHE PATENTANMELDUNG

(11) **EP 1 669 040 A1**
(43) Veröffentlichungstag der Anmeldung: **14.06.2006**
(21) Anmeldenummer: 04028967.0
(22) Anmeldetag: 07.12.2004
(51) Int. Cl.: A61C 3/10, A61C 3/00, B25B 9/00, B25B 9/04

(54) **Handwerkzeug für die Dentaltechnik und Zahnprothetik**

(71) Anmelder: Straumann Holding AG, 4437 Waldenburg (CH)
(72) Erfinder: Taormina, Matteo, 4053 Basel (CH); Lindner, Andreas, 4053 Basel (CH); Maurer, Philipp, 6003 Luzern (CH)
(74) Vertreter: Schaad, Balass, Menzl & Partner AG

(57) **Zusammenfassung**

Die Erfindung betrifft ein Handwerkzeug für die Dentaltechnik mit einem eine Hauptachse definierenden und, in Richtung der Hauptachse gesehen, einem vorderen Endbereich und einem hinteren Endbereich aufweisenden Griffteil. Dieser weist im vorderen Endbereich eine offene Aufnahmeausnehmung auf, in welcher das Spannzangenelement mit verstellbarem Aufnahmedurchmesser zur Aufnahme eines zu bearbeitenden Gegenstandes angeordnet ist. Mittels der Betätigungseinrichtung ist der Aufnahmedurchmesser des Spannzangenelementes veränderbar. Das Spannzangenelement ist im Griffteil verdrehsicher angeordnet.

## Beschreibung

Die vorliegende Erfindung betrifft ein Handwerkzeug für die Dentaltechnik gemäss dem Oberbegriff des Patentanspruches 1.

Die Anmelderin selber vertreibt ein derartiges Handwerkzeug, das aus einem Griffteil, einem Spannzangenelement und einer Betätigungseinrichtung besteht, wobei das zylindrische Griffteil im vorderen Endbereich einerseits über ein Aussengewinde und andererseits über eine sacklochartige Aufnahmeausnehmung in der Hauptachse des zylindrischen Griffteils verfügt. Teilweise in dieser Aufnahmeausnehmung versenkt, befindet sich das Spannzangenelement zur Aufnahme eines zu bearbeitenden, rotationssymmetrischen Gegenstandes. Das Spannzangenelement verfügt an seinem vorderen, über den Griffteil ragenden, Endbereich über eine aussenliegende, sich gegen das freie Ende verjüngende, Kegelmantelfläche. Die Betätigungseinrichtung in Form einer kappenartigen Überwurfmutter, welche über das Aussengewinde im vorderen Endbereich des Griffteils aufgeschraubt werden kann, weist in einem Durchlass eine Stützfläche als Gegenstück zur Kegelmantelfläche des Spannzangenelementes auf. Durch diesen Durchlass wird der zu spannende Gegenstand von aussen her in das von der Überwurfmutter und der Aufnahmeausnehmung fast vollständig umschlossene Spannzangenelement eingeführt. Das Spannzangenelement wird aufgrund des über die Stützfläche der Überwurfmutter ausgeübten Druckes auf seine Kegelmantelfläche in Richtung der Hauptachse gegen den Boden der Aufnahmeausnehmung im Griffteil gedrückt. Durch eine Drehbewegung der Überwurfmutter um die Hauptachse, relativ zum Griffteil, verändert sich der über die Stützfläche auf die Kegelmantelfläche des Spannzangenelementes abgegebene Druck, so dass eine zylinderförmige Ausnehmung im Spannbereich des Spannzangenelementes im Durchmesser verändert und der zu bearbeitende Gegenstand eingespannt, respektive freigegeben werden kann.

Da das bestehende Handwerkzeug für die Bearbeitung eines rotationssymmetrischen Gegenstandes ausgerichtet ist, können sich bei dessen Verwendung im Fall eines nicht rotationssymmetrischen Gegenstandes Probleme in der Handhabung ergeben. Die Position des Gegenstandes kann sich während des Einspannvorgangs unbeabsichtigt verändern.

Es ist eine Aufgabe der vorliegenden Erfindung, das gattungsgemässe Handwerkzeug derart weiterzubilden, dass dessen Handhabung einfacher wird und damit auch ein nicht rotationssymmetrischer Gegenstand, wie zum Beispiel ein Sekundärelement für eine Zahnprothese, eine Zahnkrone oder ein Modellanalog gehalten werden kann.

Diese Aufgabe wird mit einem erfindungsgemässen Handwerkzeug nach Anspruch 1 gelöst. Dadurch, dass das Spannzangenelement im Griffteil verdrehsicher angeordnet ist, ist gewährleistet, dass der einzuspannende Gegenstand während des ganzen Einspannvorganges in der vom Anwender gewünschten Drehlage verbleibt. Dadurch entstehen für den Anwender beim Einspannen weniger Probleme und die Handhabung des Handwerkzeuges wird erheblich vereinfacht.

Eine bevorzugte Ausführungsform des erfindungsgemässen Handwerkzeuges ist in Anspruch 2 beschrieben. Spannzangenelemente weisen in ihrem vorderen Endbereich stets einen federnden Spannbereich mit Spannzungen auf. Durch eine Betätigung der Betätigungselemente wird das Spannzangenelement gegenüber dem Griffteil in Richtung der Hauptachse in der einen oder anderen Richtung verschoben. Diese Verschiebung führt dazu, dass sich die federnde, zylindrische Aufnahme des Spannzangenelementes im Durchmesser verringert oder vergrössert.

Anspruch 3 beschreibt eine besonders bevorzugte Ausführungsform mit einer besonders einfach aufgebauten Verdrehsicherung.

Eine weitere bevorzugte Ausführungsform des erfindungsgemässen Handwerkzeuges ist in Anspruch 4 beschrieben. Durch eine derartig angeordnete Kegelmantelfläche wird erreicht, dass sich die federnde, zylindrische Aufnahme im Durchmesser vergrössert, wenn das Spannzangenelement entlang der Hauptachse in Richtung des vorderen Endbereichs des Griffteils relativ zum Griffteil verschoben wird.

Die Anordnung eines Federelementes gemäss der bevorzugten Ausführungsform des erfindungsgemässen Handwerkzeuges nach Anspruch 5 führt dazu, dass die Betätigungseinrichtung auf einfache Weise gegen den Griffteil gedrückt wird. Zudem unterstützt das Federelement eine Verschiebung des Spannzangenelementes entlang der Hauptachse in Richtung des vorderen Endbereichs des Griffteils.

Eine weitere, bevorzugte Ausführungsform des erfindungsgemässen Handwerkzeuges ist in Anspruch 6 beschrieben. Der besonders einfache Aufbau führt zu einer einfachen Bedienbarkeit des Handwerkzeuges.

Die einfache Bedienbarkeit des erfindungsgemässen Handwerkzeuges nach Anspruch 6 wird durch eine weitere, bevorzugte Ausführungsform des erfindungsgemässen Handwerkzeuges nach Anspruch 7 noch weiter erhöht. Durch ein Verschieben einer Schiebehülse der Betätigungseinrichtung in Richtung der Hauptachse, kann eine Veränderung der zylinderförmigen Ausnehmung im Spannbereich des Spannzangenelementes im Durchmesser, und ein damit verbundenes Einspannen oder Freigeben des Gegenstandes, noch schneller herbeigeführt werden, als dies mit einer Drehbewegung um die Hauptachse möglich ist. Damit wird eine Voreinstellung des federnden Spannbereiches des Spannzangenelementes auf einen gewünschten Durchmesser des zu bearbeitenden Gegenstandes durch einen Drehknopf möglich. Danach wird der Gegenstand lediglich über die Betätigung der Schiebehülse eingespannt oder freigegeben. Dies ermöglicht im Besonderen ein schnelles und einfaches Umspannen des zu bearbeitenden Gegenstandes.

Ebenfalls schnell bedienbar ist eine Ausführungsform des erfindungsgemässen Handwerkzeuges nach Anspruch 8, wo eine Längsverschiebung eines Druckknopfes beim Endbereich des Griffteils in Richtung der Hauptachse wiederum dazu führt, dass ein Einspannen oder Freigeben des Gegenstandes schnell und einfach erreicht werden kann.

Eine weitere, bevorzugte Ausführungsform des erfindungsgemässen Handwerkzeuges ist in Anspruch 9 beschrieben. Diese Anordnung hat zur Folge, dass eine Öffnung der zylindrischen Ausnehmung im Spannbereich des Spannzangenelementes im Durchmesser auch über eine Drehbewegung des Druckknopfes erzielt werden kann. Damit ist die Öffnung der Ausnehmung im Spannbereich des Spannzangenelementes im Durchmesser sehr einfach voreinstellbar, so dass bei mehrmaligem Umspannen, wie dies bei Gegenständen der obgenannten Art oft erforderlich ist, jeweils nur noch der Druckknopf betätigt werden muss.

Anspruch 10 beschreibt eine weitere, bevorzugte Ausführungsform des erfindungsgemässen Handwerkzeuges. Der Einsatz einer spiralförmigen Druckfeder als Federelement ermöglicht eine einfache, kompakte und preiswerte Möglichkeit, eine im beschränktem Raum gewünschte Federkraft auszuüben.

Weitere Eigenschaften und Vorteile der vorliegenden Erfindung werden aus den folgenden Beschreibungen der Zeichnungen ersichtlich, wobei diese lediglich als illustrierende Beispiele der Erläuterung dienen und die Erfindung in ihrem Schutzumfang nicht einschränken sollen. Es zeigen rein schematisch:
- Fig.1: eine erste Ausführungsform eines erfindungsgemässen Handwerkzeuges im Längsschnitt;
- Fig.2: die erste Ausführungsform des erfindungsgemässen Handwerkzeuges in perspektivischer Darstellung;
- Fig.3: eine zweite Ausführungsform eines erfindungsgemässen Handwerkzeuges im Längsschnitt;
- Fig.4: die zweite Ausführungsform des erfindungsgemässen Handwerkzeuges in perspektivischer Darstellung;
- Fig.5: eine dritte Ausführungsform eines erfindungsgemässen Handwerkzeuges im Längsschnitt;
- Fig.6: die dritte Ausführungsform des erfindungsgemässen Handwerkzeuges in perspektivischer Darstellung;
- Fig.7: eine vierte Ausführungsform eines erfindungsgemässen Handwerkzeuges im Längsschnitt; und
- Fig.8: die vierte Ausführungsform des erfindungsgemässen Handwerkzeuges in perspektivischer Darstellung.

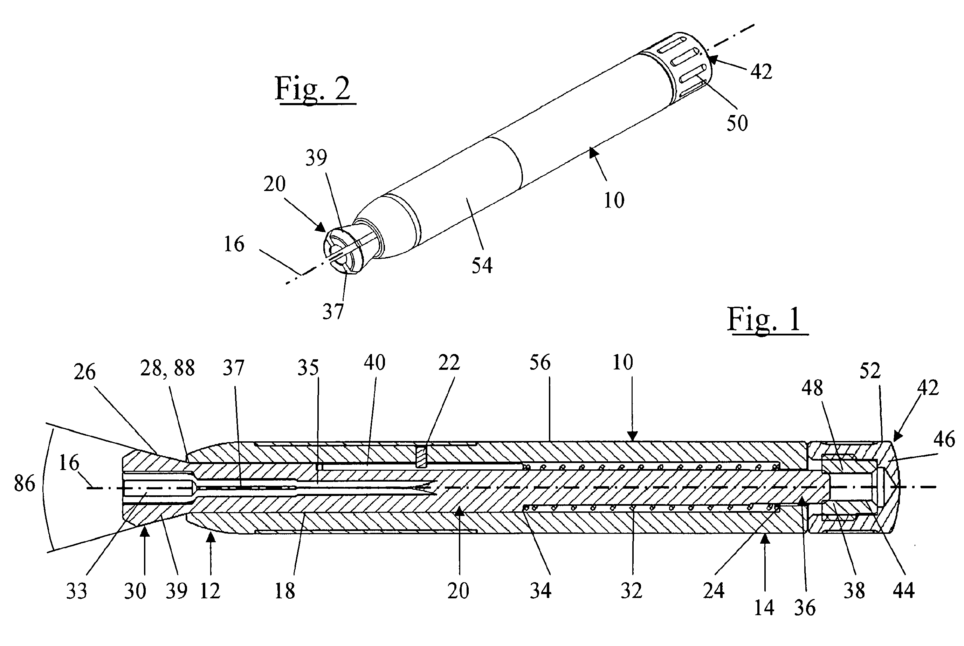

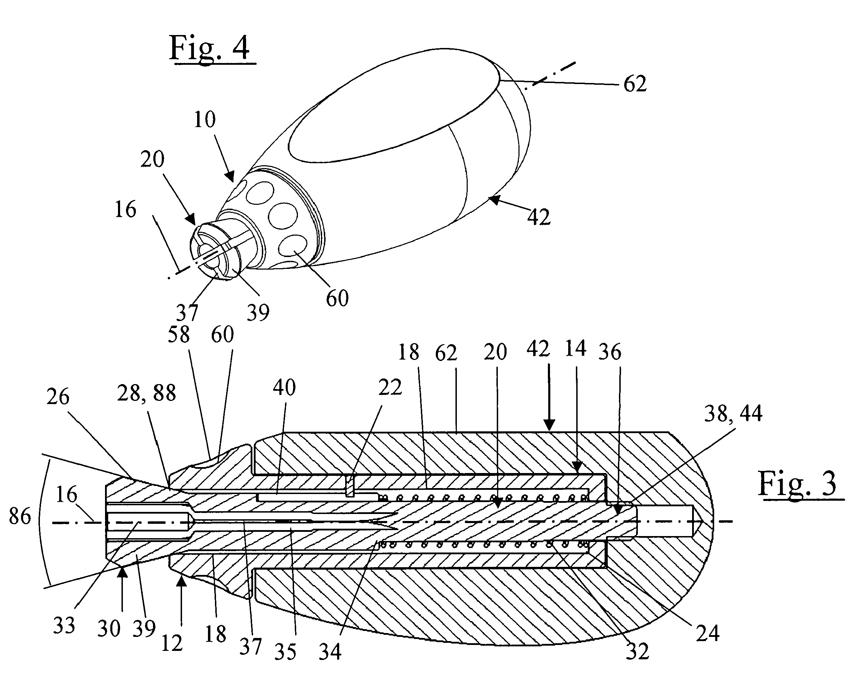

Fig. 1 und Fig.2 zeigen eine erste Ausführungsform eines erfindungsgemässen Handwerkzeuges im Längsschnitt. Ein einteiliger Griffteil 10 mit einem im wesentlichen kreisringförmigem Querschnitt verfügt über einen vorderen Endbereich 12 und einen hinteren Endbereich 14. Der kreisringförmige Querschnitt definiert eine Hauptachse 16. Im äusseren vorderen Endbereich 12 ist der zylindrische Griffteil 10 abgerundet. Zwecks vereinfachter und sicherer Handhabung des Handwerkzeuges durch den Anwender, befindet sich am Umfangsbereich 56 ein gummiartiges, hülsenförmiges Antirutschelement 54, welches in der dem vorderen Endbereich 12 zugewandten Hälfte des Handwerkzeuges angeordnet ist.

In derselben Hälfte des Handwerkzeuges ist in einer radial zur Hauptachse 16 angeordneten Öffnung im Griffteil 10 ein stiftförmiges Führungselement 22 in Form eines Spannstifts angeordnet, welches mit dem Griffteil 10 fest verbunden ist.

Der Innenraum des kreisringförmigem Querschnitts des einteiligen Griffteils 10 ist als Aufnahmeausnehmung 18 für ein Spannzangenelement 20 ausgebildet. Diese Aufnahmeausnehmung 18 verfügt im hinteren Endbereich 14 des Griffteils 10 über eine Schulter 24. Der Eingangsbereich der Aufnahmeausnehmung 18 befindet sich an der Stirnseite des Griffteils 10 im vorderen Endbereich 12.

Damit der Griffteil 10 auf das Spannzangenelement 20 einwirken kann, weist er im Eingangsbereich der Aufnahmeausnehmung 18 eine Stützfläche 28 auf. Die Stützfläche 28 ist im Eingangsbereich der Aufnahmeausnehmung 18 an der stirnseitigen Öffnung im vorderen Endbereich 12 des Griffteils 10 angeordnet und ist verrundet ausgeführt.

Das einteilige, metallische Spannzangenelement 20 ist im wesentlichen ebenfalls zylinderförmig gestaltet und weist je einen vorderen Endbereich 30 und einen hinteren Endbereich 36 auf. Das Spannzangenelement 20 weist weiter in seinem vorderen Endbereich 30 aussenseitig eine Kegelmantelfläche 26 als Gegenfläche zur Stützfläche 28 des Griffteils 10 auf, welche in Richtung des hinteren Endbereiches 36 des Spannzangenelementes 20 verjüngt ist.

An der Aussenseite des Spannzangenelementes 20 befindet sich im Bereich des Führungselementes 22 eine Längsnut 40, welche in Richtung der Hauptachse 16 angeordnet ist. Diese Längsnut 40 wirkt zusammen mit dem stiftförmigen Führungselement 22 des Griffteils 10 als Verdrehsicherung.

Von der Stirnfläche des vorderen Endbereichs 30 des Spannzangenelementes 20 ist in Richtung der Hauptachse 16 eine Ausnehmung 35 eingearbeitet, welche sich über etwa ein Drittel der Länge des Spannzangenelementes 20 erstreckt. Der an die Stirnfläche des vorderen Endbereichs 30 grenzende Teil dieser Ausnehmung 35 ist etwa in der Länge der Konusmantelfläche 26 als zylinderförmige Ausnehmung 33 erweitert und dient als Spannbereich für den zu bearbeitenden Gegenstand. Zudem weist das Spannzangenelement 20 Schlitze 37 auf, welche sich von der Stirnseite im vorderen Endbereich 30 über etwa die Hälfte des Spannzangenelementes 20 erstrecken. Durch die Schlitze 37 wurden Spannzungen 39 im vorderen Endbereich 30 des Spannzangenelementes 30 gebildet, welche federnde Eigenschaften aufweisen.

Als Abstützung für ein Federelement 32 weist das Spannzangenelement 20 etwa in der Mitte zwischen dem vorderen Endbereich 30 und dem hinteren Endbereich 36 eine Schulter 34 auf, welche dem hinteren Endbereich 14 des Griffteils 10 zugewandt ist.

In seinem hinteren Endbereich 36 weist das Spannzangenelement 20 ein rechtsgängiges Aussengewinde 38 auf, welches nach der Montage aus dem hinteren Endbereich 14 des Griffteils 10 herausragt.

Auf dieses Aussengewinde 38 ist eine Betätigungseinrichtung in Form eines mehrteiligen, kreiszylinderförmigen Drehknopfes 42 aufgeschraubt. Dazu weist der Drehknopf 42 ein entsprechendes Innengewinde 44 auf. Dieses Innengewinde 44 befindet sich in einem metallischen Gewindeeinsatz 48, welcher mit einem Grundkörper 46 aus Kunststoff fest verbunden ist. Durch das Federelement 32 wird der Drehknopf 42 flächig gegen den hinteren Endbereich 14 des Griffteils 10 gepresst. Zwecks vereinfachter und sicherer Handhabung durch den Anwender des Handwerkzeuges weist der Grundkörper 46 des Drehknopfes 42 an seinem äusseren Umfang 52 Vertiefungen in Form von Längsrillen 50 auf.

Das Federelement 32 in Form einer spiralförmigen Druckfeder, welches in der Aufnahmeausnehmung 18 angeordnet ist, stützt sich einerseits auf die Schulter 24 des Griffteils 10 und andererseits auf die Schulter 34 des Spannzangenelementes 20 ab und umgreift das Spannzangenelement 20 in Richtung der Hauptachse 16.

In Fig. 1 ist das Spannzangenelement 20 in der Position gezeigt, in der die federnde, zylinderförmige Ausnehmung 33 den maximalen Aufnahmedurchmesser aufweist.

Fig.3 und Fig.4 zeigen eine zweite Ausführungsform im Längsschnitt. Für gleich wirkende Teile werden im folgenden dieselben Referenznummern verwendet wie bei der ersten Ausführungsform. Des weiteren ist die zweite Ausführungsform im wesentlichen wie die erste Ausführungsform aufgebaut. Daher werden nachfolgend nur noch die Unterschiede beschrieben.

Gegenüber der Ausführungsform von Fig. 1 ist der Griffteil 10 im vorderen Endbereich 12 aussenseitig im Durchmesser umlaufend erweitert. Die Stützfläche 28 im Eingangsbereich der Aufnahmeausnehmung 18 an der stirnseitigen Öffnung im vorderen Endbereich 12 des Griffteils 10 ist als Innenkonusfläche ausgebildet.

Der Drehknopf 42 ist in Richtung des vorderen Endbereiches 12 des Griffteils 10 derart verlängert, dass er den Griffteil 10 bis auf einen Abschnitt 58 vollständig aufnimmt.

Zwecks vereinfachter und sicherer Handhabung weist der Griffteil 10 auf dem Umfang des Abschnitts 58 dellenförmige Einbuchtungen 60 auf.

Um die Betätigung des Drehknopfes 42 zu erleichtern und eine sichere Handhabung zu erzielen weist der Drehknopf 42 eine Facette 62 auf.

In Fig.3 ist das Spannzangenelement 20 in der Position gezeigt, in der die federnde, zylinderförmige Ausnehmung 33 den maximalen Aufnahmedurchmesser aufweist.

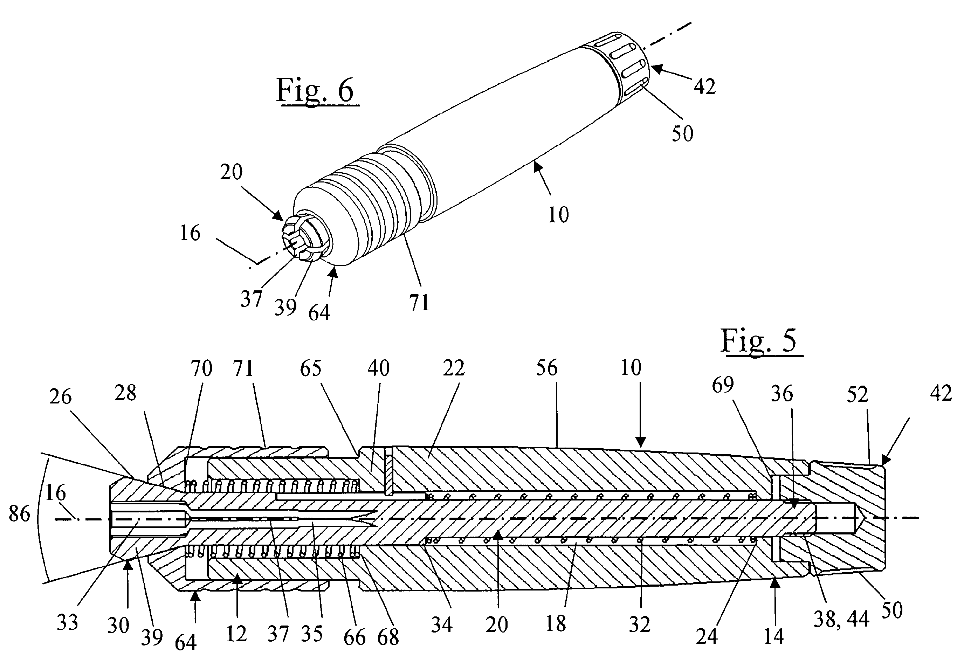

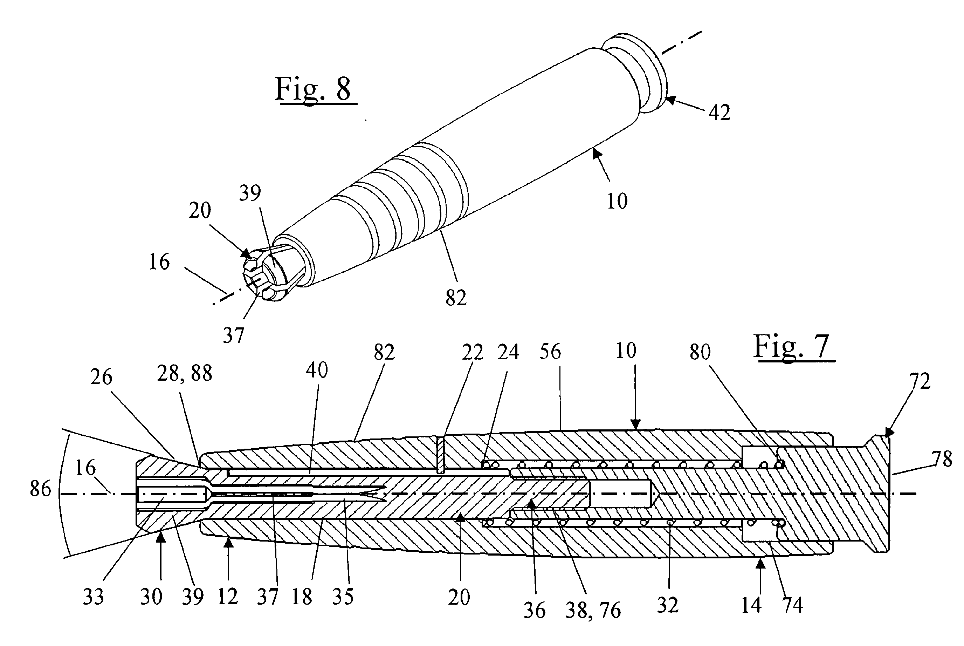

Fig.5 und Fig.6 zeigen eine dritte Ausführungsform im Längsschnitt. Für gleich wirkende Teile werden im folgenden dieselben Referenznummern verwendet wie bei der ersten Ausführungsform. Des weiteren ist die dritte Ausführungsform im wesentlichen wie die erste Ausführungsform aufgebaut. Daher werden nachfolgend nur noch die Unterschiede beschrieben.

Gegenüber der Ausführungsform von Fig.1 ist der Griffteil 10 hauptsächlich in seinem vorderen Endbereich 12 unterschiedlich ausgestaltet, da sich die Stützfläche 28 nicht mehr im Eingangsbereich der Aufnahmeausnehmung 18 befindet, sondern an einer im wesentlichen zylindrischen Schiebehülse 64, welche im vorderen Endbereich 12 über einen verjüngten Aussendurchmesser 65 des Griffteils 10 geschoben ist. Weiter weist das Griffteil 10 im vorderen Endbereich 12 eine Innenschulter 68 auf. Im hinteren Endbereich 14 weist das Griffteil 10 eine Ausnehmung 69 auf, welche den dementsprechend angepassten Drehknopf 42 in Richtung der Hauptachse 16 axial führt.

Die im wesentlichen hohlzylinderförmige Schiebehülse 64 weist eine Stirnwand 70 auf, welche sich auf der Seite des vorderen Endbereiches 30 des Spannzangenelementes 20 befindet. Die Stirnwand 70 dient einerseits dazu, das Federelement 32 abzustützen und andererseits als Stützfläche 28. Dazu ist in der Stirnwand die Stützfläche 28 als Innenkonusfläche angeordnet, welche passend der Kegelmantelfläche 26 des Spannzangenelementes 20 ausgebildet ist. Zwecks vereinfachter und sicherer Bedienung weist die Schiebehülse 64 an ihrem Umfang umlaufende Rillen 71 auf.

Um die Schiebehülse 64 gegen die Kegelmantelfläche 26 des Spannzangenelementes 20 zu drücken, ist ein weiteres Federelement 66 zwischen ihr und dem Griffteil 10 angeordnet.

Das weitere Federelement 66 in Form einer spiralförmigen Druckfeder ist in der Aufnahmeausnehmung 18 angeordnet und stützt sich einerseits auf die Innenschulter 68 des Griffteils 10 und andererseits auf die Stirnwand 70 der Schiebehülse 64 ab und umgreift das Spannzangenelement 20 in Richtung der Hauptachse 16.

In Fig.5 ist das Spannzangenelement 20 in der Position gezeigt, in der die federnde, zylinderförmige Ausnehmung 33 den maximalen Aufnahmedurchmesser aufweist.

Fig.7 und Fig.8 zeigen eine vierte Ausführungsform im Längsschnitt. Für gleich wirkende Teile werden im folgenden dieselben Referenznummern verwendet wie bei der ersten Ausführungsform. Des weiteren ist die vierte Ausführungsform im wesentlichen wie die erste Ausführungsform aufgebaut. Daher werden nachfolgend nur noch die Unterschiede beschrieben.

Gegenüber der Ausführungsform von Fig.1 ist der Griffteil 10 nebst einem konisch gegen den vorderen Endbereich 12 zulaufenden Umfangsbereich 56 mit umlaufenden Rillen 82 hauptsächlich in seinem hinteren Endbereich 14 anders ausgestaltet, da dort anstelle des Drehknopfes 42 ein Druckknopf 72 eingesetzt ist.

Dementsprechend ist die Aufnahmeausnehmung 18 auch unterschiedlich gestaltet, indem sie nebst einer Druckknopfausnehmung 74 im hinteren Endbereich 14 wieder eine Schulter 24 aufweist. Im Gegensatz zur ersten Ausführungsform nach Fig. 1 befindet sich die Schulter 24 etwa in der Mitte zwischen dem vorderen Endbereich 12 und dem hinteren Endbereich 14 des Griffteils 10 und ist dem hinteren Endbereich 14 des Griffteils 10 zugewandt.

Ähnlich der dritten Ausführungsform dient die Druckknopfausnehmung 74 zur Führung der Betätigungseinrichtung in Richtung der Hauptachse 16. Im Gegensatz zu Fig.3 wird anstelle des Drehknopfes 42 aber der Druckknopf 72 axial geführt.

Der Druckknopf 72 weist ein gegen den vorderen Endbereich 12 gerichtetes Innengewinde 76 auf. Dieses Innengewinde 76 ist auf das Aussengewinde 38 des Spannzangenelementes 20 aufgeschraubt. Weiter weist der Druckknopf 72 an seinem freien Ende eine Druckfläche 78 zur Betätigung auf.

Das Federelement 32 in Form einer spiralförmigen Druckfeder ist in der Aufnahmeausnehmung 18 angeordnet. Im Gegensatz zur ersten Ausführungsform stützt es sich einerseits auf die Schulter 24 des Griffteils 10 und andererseits auf die Schulter 80 des Druckknopfes 72 ab und umgreift zum einen das Spannzangenelement 20 und zum anderen den Druckknopf 72 in Richtung der Hauptachse 16.

In Fig.7 ist das Spannzangenelement 20 in der Position gezeigt, in der die federnde, zylinderförmige Ausnehmung 33 den maximalen Aufnahmedurchmesser aufweist.

Bei allen vier Ausführungsformen kann das Spannzangenelement 20 in Richtung der Hauptachse 16 relativ zum Griffteil 10 verdrehsicher verschoben werden.

In der ersten und der zweiten Ausführungsform wird durch eine Drehbewegung des Drehknopfes im Gegenuhrzeigersinn, da es sich bei den Gewinden 38 und 44 um übliche Rechtsgewinde handelt, das Spannzangenelement 20 in Richtung des vorderen Endbereiches 12 des Griffteils 10 verschoben. Damit verschiebt sich die Kegelmantelfläche 26 in Richtung der Hauptachse 16 von der Stützfläche 28 des Griffteils 10 weg. Durch das Entfallen des durch die Stützfläche 28 auf die Kegelmantelfläche 26 der federnden Spannzungen 39 abgegebenen Druckes werden die federnden Spannzungen 39 entlastet. Dies hat zur Folge, dass die federnde, zylinderförmige Ausnehmung 33 den maximalen Aufnahmedurchmesser aufweist. Das Federelement 32 presst den Drehknopf 42 dabei flächig gegen den hinteren Endbereich 14 des Griffteils 10 und unterstützt damit ein Öffnen der zylinderförmigen Ausnehmung 33.

Bei der dritten Ausführungsform dient der Drehknopf 42 dazu, das Spannzangenelement 20 in Richtung der Hauptachse 16 relativ zum Griffteil 10 so zu verschieben, dass eine Voreinstellung der zylinderförmige Ausnehmung 33 entsprechend dem Durchmesser des zu bearbeitenden Gegenstandes erreicht werden kann. Eine Freigabe des zu bearbeitenden Gegenstandes erfolgt dabei durch eine Längsverschiebung der Schiebehülse 64 entlang der Hauptachse 16 in Richtung des hinteren Endbereiches 36 des Spannzangenelementes 20. Da es sich beim Federelement 32 um eine Druckfeder handelt, erfolgt das Einspannen beim Entlasten der Schiebehülse 64 selbsttätig.

Bei der vierten Ausführungsform dient der Druckknopf 72 einerseits dazu, das Spannzangenelement 20 in Richtung der Hauptachse 16 relativ zum Griffteil 10 so zu verschieben, dass eine Voreinstellung der zylinderförmige Ausnehmung 33 entsprechend dem Durchmesser des zu bearbeitenden Gegenstandes erreicht werden kann. Das Einspannen und Freigeben des zu bearbeitenden Gegenstandes erfolgt anschliessend lediglich über eine entsprechende Längsverschiebung der Druckknopf 72 in Richtung der Hauptachse 16. Eine Freigabe des zu bearbeitenden Gegenstandes erfolgt dabei durch eine Druckbewegung auf den Druckknopf 72 und ist damit der Handbewegung beim Bedienen eines üblichen Kugelschreibers ähnlich. Da es sich beim Federelement 32 um eine Druckfeder handelt, erfolgt das Einspannen beim Entlasten des Druckknopfes 72 selbsttätig. Der Druckknopf 72 ist in dieser Ausführungsform über eine Gewindeverbindung 38, 76 mit dem Spannzangenelement 20 verbunden.

Es ist durchaus denkbar, dass das erfindungsgemässe Handwerkzeug auch weitere Gegenstände des Dentaltechnik-und Zahnprothetikbereiches festhalten kann.

Weiter sind durchaus auch andere Formen für Griffteil 10, Spannzangenelement 20, Drehknopf 42 und Druckknopf 72 denkbar. Zudem ist es möglich, dass die einzelnen Elemente wie Griffteil 10, Spannzangenelement 20, Drehknopf 42 und Druckknopf 72 auch mehrteilig aufgebaut sind. Zum Beispiel könnte die Stützfläche 28 im Eingangsbereich der Aufnahmeausnehmung 18 als separates Bauteil im Griffteil 10 integriert werden. Bezüglich der Materialien ist es denkbar, dass für alle Teile entweder Kunststoffe, Metalle, Sinterwerkstoffe oder eine Kombination davon geeignet sind.

Zudem ist es möglich, dass die Aufnahmeausnehmung 18 im wesentlichen konisch ist, wobei sich der Konus gegen den hinteren Endbereich 14 des Griffteils 10 verjüngt.

Es ist aber auch denkbar, dass das Führungselement 22 direkt am Griffteil 10 angeformt ist.

Im Umfangsbereich 56 des Griffteils 10 des erfindungsgemässen Handwerkszeuges nach Fig. 1 befindet sich ein Antirutschelement 54, welches derart ausgestaltet ist, dass die Arbeitssicherheit dadurch erhöht wird, dass das Handwerkzeug besser und sicherer gehalten werden kann. Es ist denkbar, dass das Griffelement 10 nebst den in Fig.7 gezeigten umlaufenden Rillen 82 seinerseits ebenfalls Vorsprünge, wie zum Beispiel Noppen, und/oder Vertiefungen, zum Beispiel ähnlich der dellenförmigen Einbuchtungen von Fig.4, aufweist.

Das Griffelement 10 ist sinnvollerweise aus einem Material gefertigt, das einen guten Haftwert aufweist. So kann zum Beispiel verhindert werden, dass das Handwerkzeug dem Anwender während der Bearbeitung des Gegenstandes und/oder dem Einspannvorgang unbeabsichtigt aus der Hand gleitet. Es ist auch denkbar, dass der Griffteil 10 mit einer Schicht aus Haftmaterial beschichtet ist. Dasselbe gilt sinngemäss auch für die Betätigungselemente Drehknopf 42, Druckknopf 72 und Schiebehülse 64.

Da sich der zu bearbeitende Gegenstand während der Bearbeitung stark erhitzen kann, kann sich durch Wärmeleitung besonders der vordere Endbereich 12 des Griffteils 10 sowie allenfalls die Schiebehülse 64 ebenfalls erhitzen. Es ist aber möglich, die Finger des Anwenders des erfindungsgemässen Handwerkszeuges vor solchen ungewollten Wärmeeinflüssen zu schützen. Besonders dann, wenn das Spannzangenelement 20 aus Metall gefertigt ist, empfiehlt sich eine Wärmeisolation zum Umfangsbereich 56 des Griffteils 10, sowie allenfalls eine Wärmeisolation zur Schiebehülse 64. Eine gewünschte Wärmeisolation kann zum Beispiel über eine Verwendung von nichtmetallischen, thermisch isolierenden Werkstoffen für den Griffteil 10, allfällige Antirutschelemente 54 und die Schiebehülse 64 erreicht werden. Ebenfalls denkbar ist eine Lösung durch einen mehrteiligen, wärmeisolierenden Aufbau des Griffteils 10 und der Schiebehülse 64, wobei diejenigen Teile, die vom Anwender direkt berührt werden müssen, mit Vorteil aus einem Kunststoff gefertigt sind. Die vorgeschlagene Lösung für eine Wärmeisolation gilt sinngemäss ebenfalls für den Drehknopf 42 und den Druckknopf 72.

Der Öffnungsunterschied im Durchmesser der zylinderförmigen Ausnehmung ergibt sich aus der Geometrie des Spannzangenelementes. Ein grösserer Öffnungsunterschied der zylinderförmigen Ausnehmung 33 des Spannzangenelementes 20 kann einerseits durch die Verschiebung des Spannzangenelementes 20 relativ zum Griffteil 10 in Richtung des vorderen Endbereiches 12 des Griffteils 10 entlang der Hauptachse 16 und andererseits durch einen grösseren Kegelwinkel 86 erreicht werden. Anstelle des bisher üblichen Kegelwinkels der Kegelmantelfläche im vorderen Endbereich des Spannzangenelementes von zirka 20° bis 30° beträgt der Kegelwinkel 86 der Kegelmantelfläche 26 im vorderen Endbereich 30 des Spannzangenelementes 20 des erfindungsgemässen Handwerkzeuges mit 40° bis zirka 100° deutlich mehr.

Dies wirkt sich wie folgt aus: Infolge des grösseren Kegelwinkels 86 der Kegelmantelfläche 26 verändert sich der Öffnungsunterschied der zylindrischen Ausnehmung 33 im Durchmesser im Vergleich zum bisher üblichen Kegelwinkel bei gleichbleibender Verschiebung in Richtung der Hauptachse 16 stärker. Somit kann beim erfindungsgemässen Handwerkzeug ein Öffnungsunterschied und damit ein Spannbereich von zirka 2 bis zirka 5 mm im Durchmesser erzielt werden, während beim bisher üblichen Handwerkzeug lediglich ein Öffnungsunterschied von zirka 1 mm im Durchmesser erreichbar ist. Der Spannbereich des erfindungsgemässen Handwerkzeuges ermöglicht in der Folge ein Einspannen von zu bearbeitenden Gegenständen mit unterschiedlicheren Durchmessern als dies mit dem bisher üblichen Handwerkzeug der Fall ist.

Es ist auch denkbar, dass die Verbindung des Drehknopfes 42, respektive des Druckknopfes 72 mit dem Spannzangenelement 20 als Schnappverschluss ausgeführt ist. Dabei kann die Schnappverbindung lösbar oder nicht lösbar gestaltet sein. Weiter ist es möglich, dass sich ein oder mehrere Zwischenstücke zwischen dem Spannzangenelement 20 und Drehknopf 42, respektive Druckknopf 72 befinden. Bei einer Verbindung in Form einer Gewindeverbindung ist es ebenfalls möglich, dass sich am Spannzangenelement anstelle des Aussengewindes 38 ein Innengewinde befindet, in welches ein mit dem Drehknopf 42, respektive Druckknopf 72 verbundener Gewindebolzen mit entsprechendem Aussengewinde eingeschraubt werden kann. Weiter ist es denkbar, dass Haftmittel in der Gewindeverbindung ein unbeabsichtigtes Lösen der Gewindeverbindung verhindern und somit eine Verliersicherung der Einzelteile des erfindungsgemässen Handwerkzeuges bilden. Selbstverständlich ist es auch möglich, dass die Gewinde mehrgängig sind.

Ebenfalls gut vorstellbar ist es, dass das Handwerkzeug derart ausgestaltet ist, dass die Betätigungselemente wie Drehknopf 42 und Druckknopf 72 nicht ohne weiteres entfernt werden können. Dies kann Vorteile punkto Verlierbarkeit der Einzelteile des Handwerkzeuges bringen.

## Patentansprüche

1. Handwerkzeug für die Dentaltechnik mit einem eine Hauptachse (16) definierenden und, in Richtung der Hauptachse gesehen, einen vorderen Endbereich (12) und einen hinteren Endbereich (14) aufweisenden Griffteil (10), welcher eine im vorderen Endbereich (12) offene Aufnahmeausnehmung (18) aufweist, einem in der Aufnahmeausnehmung (18) angeordneten Spannzangenelement (20) zur Aufnahme eines zu bearbeitenden Gegenstandes und einer Betätigungseinrichtung für das Spannzangenelement (20), **dadurch gekennzeichnet, dass** das Spannzangenelement (20) im Griffteil (10) verdrehsicher angeordnet ist.

2. Handwerkzeug nach Anspruch 1, **dadurch gekennzeichnet, dass** das Spannzangenelement (20) gegenüber dem Griffteil (10) in Richtung der Hauptachse (16) verschiebbar ist.

3. Handwerkzeug nach Anspruch 1 oder 2, **dadurch gekennzeichnet, dass** das Spannzangenelement (20) eine parallel zur Hauptachse (16) verlaufende Längsnut (40) und der Griffteil (10) ein in die Längsnut (40) eingreifendes Führungselement (22) zur Verdrehsicherung aufweist.

4. Handwerkzeug nach einem der Ansprüche 1 bis 3, **dadurch gekennzeichnet, dass** das Spannzangenelement (20) in seinem vorderen Endbereich (30) aussenseitig eine Kegelmantelfläche (26) aufweist, welche in Richtung zum hinteren Endbereich (36) des Spannzangenelementes (20) verjüngend ausgebildet ist.

5. Handwerkzeug nach einem der Ansprüche 1 bis 4, **dadurch gekennzeichnet, dass** in der Aufnahmeausnehmung (18) ein Federelement (32) angeordnet ist, welches sich mit einem, dem hinteren Endbereich (14) des Griffteils (10) zugewandten, Ende am Griffteil (10) und mit einem anderen Ende am Spannzangenelement (20) abstützt.

6. Handwerkzeug nach Anspruch 5, **dadurch gekennzeichnet, dass** die Betätigungseinrichtung einen beim hinteren Endbereich (14) des Griffteils angeordneten Drehknopf (42) aufweist, der am Griffteil (10) abgestützt ist und der über eine Gewindeverbindung (38, 44) mit dem Spannzangenelement (20) verbunden ist, wobei beim Drehen des Drehknopfes (42) um die Hauptachse (16) das Spannzangenelement (20) in Richtung der Hauptachse (16) verschoben wird.

7. Handwerkzeug nach einem der Ansprüche 1 bis 6, **dadurch gekennzeichnet, dass** die Betätigungseinrichtung weiter eine in Richtung der Hauptachse (16) verschiebbare Schiebehülse (64) aufweist, welche beim vorderen Endbereich (12) des Griffteils (10) angeordnet ist, wobei ein weiteres Federelement (66) zwischen der Schiebehülse (64) und dem Griffteil (10) angeordnet ist und die Schiebehülse (64) in Richtung der Hauptachse (16) verschiebbar ist.

8. Handwerkzeug nach einem der Ansprüche 1 bis 4, **dadurch gekennzeichnet, dass** die Betätigungseinrichtung beim hinteren Endbereich (14) des Griffteils (10) einen Druckknopf (72) aufweist, welcher mit dem Spannzangenelement (20) verbunden ist, und in der Aufnahmeausnehmung (18) ein Federelement (32) angeordnet ist, welches sich mit einem, dem vorderen Endbereich (12) des Griffteils (10) zugewandten, Ende am Griffteil (10) und mit einem anderen Ende am Druckknopf (72) abstützt, wobei beim Verschieben des Druckknopfes (72) in Richtung der Hauptachse (16) das Spannzangenelement (20) ebenfalls in Richtung der Hauptachse (16) verschoben wird.

9. Handwerkzeug nach Anspruch 8, **dadurch gekennzeichnet, dass** der Druckknopf (72) über eine Gewindeverbindung (38, 76) mit dem Spannzangenelement (20) verbunden ist, wobei beim Drehen des Druckknopfes (72) um die Hauptachse (16) das Spannzangenelement (20) in Richtung der Hauptachse (16) verschoben wird.

10. Handwerkzeug nach einem der Ansprüche 5 bis 9, **dadurch gekennzeichnet, dass** das Federelement (32) und gegebenenfalls das weitere Federelement (66) als spiralförmige Druckfeder ausgebildet ist.
